Europäisches Patentamt

(19) **European Patent Office**

Office européen des brevets

(11) Publication number: **0 058 651**
**B1**

(12) **EUROPEAN PATENT SPECIFICATION**

(45) Date of publication of patent specification: **16.01.85**

(51) Int. Cl.⁴: **A 23 K 1/14,** A 23 K 1/06, A 23 K 1/18, A 23 K 3/04 .

(21) Application number: **82850018.1**

(22) Date of filing: **10.02.82**

(54) An improved method of processing cattle feed products and a plant for performing the method.

(30) Priority: **11.02.81 SE 8100936**

(43) Date of publication of application:
**25.08.82 Bulletin 82/34**

(45) Publication of the grant of the patent:
**16.01.85 Bulletin 85/03**

(84) Designated Contracting States:
**AT BE CH DE FR GB IT LI LU NL SE**

(56) References cited:
**DE-B-1 229 826**
**FR-A-2 420 925**
**GB-A-1 175 565**
**US-A-2 947 632**

(73) Proprietor: **Svensk Exergiteknik AB**
**Päskbergsgatan 3**
**S-412 68 Göteborg (SE)**

(72) Inventor: **Hedström, Bengt Olof Arvid**
**Hultgrensgatan 4**
**S-412 59 Göteborg (SE)**
Inventor: **Svensson, Claes-Göran Sigurd**
**Tjärnstigen 6**
**S-442 90 Kungälv (SE)**

(74) Representative: **Ferkinghoff, Claes-Göran et al**
**ALFONS HEDBERGS PATENTBYRA AB**
**Aschebergsgatan 35**
**S-411 33 Göteborg (SE)**

Courier Press, Leamington Spa, England.

## Description

The subject invention concerns a method of processing cattle-feed products which are based on agricultural materials such as sugar pulp, citrus pulp and peel, or on material obtained in the fermentation of agricultural products such as distiller's grain, from e.g. corn, wheat and barley.

In the production of natural sugar (cane sugar, saccharoses) from sugar beet and cane the fibre material is used for various purposes after removal of the sugar juice through leaching. Beet pulp which is obtained from sugar beet may be used without further processing as cattle feed. To facilitate transport and storage of beet pulp large amounts are dried and sometimes formed into pellets. Prior to drying the beet pulp is usually enriched with molasses, which is a by-product obtained in the production of sugar syrup. The product obtained in this process is a very valuable, highly nourishing cattle feed which is rich in fibres.

After removal of the beet tops and washing of the beet roots, the beet roots are cut into small pieces by specially designed cutters to form a pulp. Diffusers are used to leach the sugar from the pulp with the aid of water, usually in counter-current flow. The sugar extracted from the beet pulp is obtained as crude juice which may be further refined, and the beet pulp is then dewatered in a pressing operation in e.g. cone presses or screw-spindle presses. To produce cattle feed, the pulp is normally dewatered from appr. 5% dry contents to dry contents of between 15 and 25%. The water extracted in the pressing operation is used in the leaching process which is carried out in diffusers, as mentioned above.

When beet pulp is enriched with molasses the molasses is added after the pressing procedure but prior to drying the pulp. Molasses which contains approximately 20% of water and the beet pulp are mixed in proportions ensuring that the dry solids content will be in the range of between 30 and 40%, usually about 35%. This means that approximately 30% of the dry matter is sugar.

The subsequent drying is carried out in hot gas, usually flue gas which is generated in the burning of oil or gas. Flue gas and beet pulp are brought into contact, generally in a rotating drum dryer but also drying in steam dryers, so called pneumatic drying in flue gas, is possible.

Modern flue gas dryers consume about 100 liters of fuel oil for each ton of evaporated water, that is, fuel oil in amounts varying between 150 and 200 liters per ton product, depending on the water contents of the beet pulp at the beginning of the drying process. In addition, some smaller amounts of oil are used per ton of product to generate the steam required for pre-heating and atomizing the fuel oil, as well as about 100 kWh per ton product in electric energy.

The residence time in rotary dryers is normally at least 30 minutes. The temperature of the gas at the onset of the drying procedure may be e.g. 580°C but 110°C at dryer outlet. If gas is recirculated in order to maintain a wet bulb temperature of 70°C the average operative temperature difference is appr. 185°C. The elevated temperature is necessary to remove (evaporate) the moisture from the hygroscopic material in 30 minutes. The total area of the particles that is exposed to the effects of the drying in rotary dryers is very small, since most of the time the material is at the bottom of the rotating drum.

The data given above show that it is very expensive to produce cattle feed with prior-art methods. However, not only the high manufacturing price of such cattle feed products is a disadvantage but also in other respects the manufacturing technique used today suffers from serious drawbacks. For instance, flue gas drying takes place at elevated temperatures, generally between 400 and 600°C but often as high as 1000°C. When beet pulp is exposed to the effects of direct contact with such very hot gases the smallest particles in the pulp dry very quickly, oxidize and burn. In this way some 5 to 10% of the dry solids content of the product is lost. In addition, the charred remnants in the beet pulp give the product a bad flavour and a dark colour which reduces the quality of the product.

It has recently been reported in literature (for instance "British Sugar Conference", June 1980) that harmful chemicals may be found in cattle feed that has been dried by means of flue gases obtained from the combustion of oil or gas.

When oil or flue gas is used, combustion products, such as soot and ashes but also unburned hydrocarbons are absorbed in the cattle feed.

Owing to the presence in the beet pulp of particles of very varying sizes there is a marked risk that the larger particles will not dry to the desired extent. The presence of such not sufficiently dry particles reduces the shelf life of the cattle feed and makes it necessary to control the flue-gas drying process carefully in order that it be possible to obtain a high and even level of dryness. If the level of dryness is too low mildew and moulding may form and the product must be discarded.

Because of the drawbacks outlined above sugar-beet pulp, for instance has up to now only been used as cattle feed despite the high nutritious value and the high fibre content of this material.

Owing to the method in accordance with the invention the drawbacks outlined above and inherent in the techniques hitherto used to process e.g. beet pulp and similar agricultural material into an edible product, has been eliminated. In addition, the method in accordance with the invention uses considerably less energy to dry the beet pulp.

The method in accordance with the invention is characterised in that the agricultural material to be processed into cattle feed, such as sugar-beet pulp, citrus and pulp and peel, or agricultural material obtained in the fermentation of agricultural products, such as distiller's grain, after having been dewatered in a pressing and/or evaporation process, is subjected to the processing steps consisting of heating the material in water vapour, known as carrier steam, disintegrating the material in said carrier steam to obtain an approximately uniform particle size throughout of all solid matter incorporated in said material, drying said particles in a heat exchanger wherein said carrier steam preferably serves as a contributory drying medium, said processing steps being carried out in the sequence indicated or in any other suitable sequence, separating said material from the carrier steam and cooling said material.

The invention likewise concerns a plant designed for performing the method. The plant is primarily characterised by a vessel containing pressurized steam to which the material is transported via a first pressure lock, disintegrating means to impart to all particles incorporated in the beet pulp an approximately uniform size, equipment for drying the material and means for conveying the material through said drying equipment and for separating said material from steam which serves as a material carrier medium, and a second pressure lock for discharging said material to the atmosphere.

The invention will be described in closer detail in the following with reference to the accompanying drawings showing some embodiments of a plant used to process cattle feed material in accordance with the subject invention. In the drawings

Fig. 1 is a schematical view of a first embodiment of a plant in accordance with the invention for processing sugar beet pulp,

Fig. 2 is a graph, showing beet pulp drying time with and without expansion of the material,

Fig. 3 is a schematical view of a second embodiment of a plant in accordance with the invention used for processing beet pulp to which molasses has not been added,

Fig. 4 shows schematically processing of peel and pulp from citrus fruits, and

Fig. 5 shows a third embodiment of a plant in accordance with the invention for processing distiller's grain.

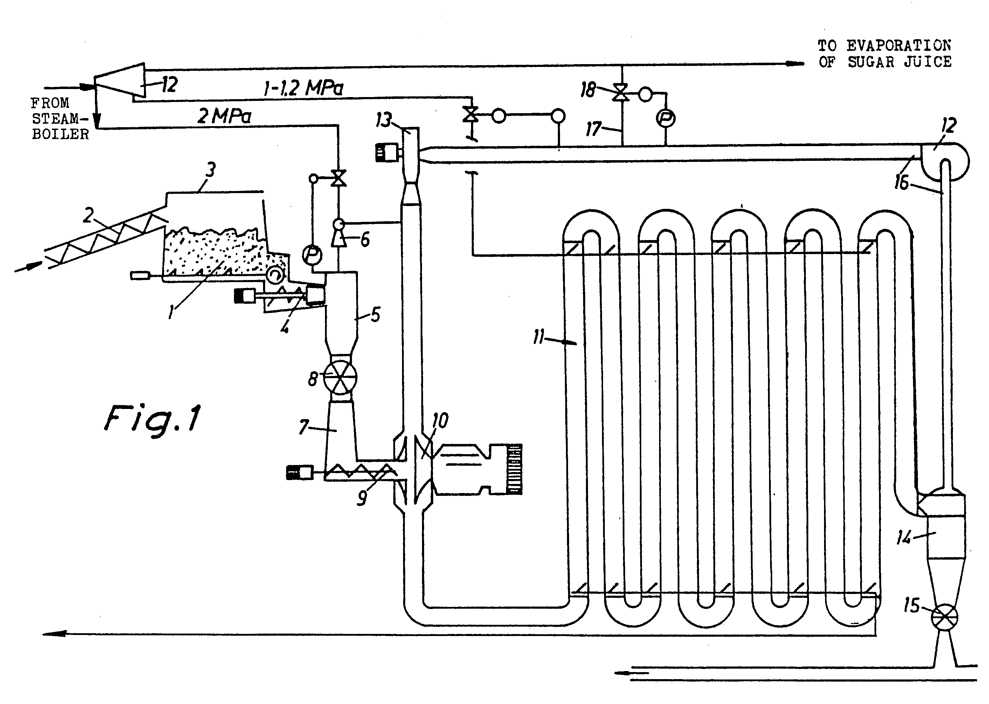

The invention will be described in the following with reference initially to Fig. 1 which shows a plant for processing beet pulp. From a leaching plant (not shown) where sugar is extracted, beet pulp 1 is transported by a feed screw 2 to an intermediate storage 3 to be further processed. While the pulp is being conveyed in the feed screw 2 molasses is preferably added thereto, to be homogeneously mixed with the beet pulp 1. From the intermediate storage 3 beet pulp 1 is conveyed continuously by a second feed screw 4 into a steam pressure vessel 5 which is filled with water vapour. The vapour is pressurized, preferably at 0.6 MPa. The steam pressure is generated by a steam ejector 6 which with the aid of high-pressure steam in a proportion of 30% and at a pressure of 2 MPa compresses steam in a proportion of 70% and at a pressure of 0.4 MPa into a pressure of 0.6 MPa. In the pressure vessel 5, the water vapour condenses on the beet pulp, heating it rapidly to saturation temperature, about 150°C.

The beet pulp is thereafter conveyed to a chamber 7 which is pressurized to a lower pressure (0.4 MPa) than the steam vessel 5. Before entering the chamber 7 the pulp has to pass through a rotary vane feeder 8 which serves as a pressure lock. The material expands as a result of the pressure reduction and the liquid-filled cells of the material burst, giving the material a fluffier structure which facilitates the ensuing drying. In addition, it is easier to digest by cattle.

From the chamber 7 a screw feeder 9 conveys the beet pulp to a defibrator 10 which in the embodiment shown is a disc refiner, although other types of defibrators may be used, such as disc crushers, attrition mills or defibrators. The defibrator 10 operates at an effective disc clearance of between 0.5 and 1.0 millimeters. The material is blown out of the refiner housing and into the subsequent dryer 11 by means of carrier steam at a pressure of 0.4 MPa.

The expansion as well as the mechanical disintegration in the refiner or defibrator 10 results in fragmentation of the material with a view to produce particles of as far as possible uniform size, which makes it possible to reduce the length of the ensuing drying process considerably.

The dryer 11 is a so called counter-pressure dryer, or steam dryer and consists of heat exchangers and transport pipes interconnected by pipe bends. This type of dryer is described in US 4 043 049 and is used to dry cellulose fibres, usually from a 50% solids content to approximate 90% solids content. From the plant turbine 12 (or steam boiler) steam is supplied to the dryer at a pressure of between 1 and 1.2 MPa. The heating steam condenses and the condensate is collected from the heat exchangers and carried to the feed-water system to preheat the fresh feed water. The heating steam may also be a mixture of the steam from the turbine (boiler) and of the carrier steam mentioned previously which mixture is obtained e.g. from mechanical compression operations (thermo-compression or vapour compression) or e.g. from a steam ejector. The heating steam may also be carrier steam alone, which is generated in the drying process and is subsequently compressed in a compressor.

Heat may also be added in other media than water vapour at a higher pressure than the carrier steam. For instance hot oil or Dowtherm® may be used, which is made to condense or is cooled in the heat exchangers of the dryer 11.

The beet pulp is mixed with carrier steam, preferably in proportions by weight of between 1:2 and 1:10. The suspension consisting of beet pulp, particles and carrier steam, is transported through the dryer 11 with the aid of fans 12, 13 at a velocity of 20—30 m/s initially and of 40 m/s towards the end. As the water is evaporated from the beet pulp the amount/proportion of steam in the suspension increases. Because the beet pulp is dried an super-heated carrier steam, a surplus of carrier steam is

**0 058 651**

formed as well as dried beet pulp, that is, cattle feed, when water is evaporated from the beet pulp. This surplus of carrier steam may, as described above, be used as heating dryer steam after compression. However, it is preferable to use it as processing steam in the plant, for instance to evaporate the sugar juice (see Fig. 1), the so called light juice, in a multiple-effect evaporation plant. The surplus steam thus generated may be used either directly or after regeneration in a steam generator. In the latter, pure condensate derived from the heat exchangers of the dryer plant 11 or from the feed water system is heat-exchanged with surplus steam. The steam is condensed and transfers its heat in the steam generator to the water with forms steam. In this manner, pure processing steam is formed which may be carried to the low-pressure steam system of the plant (usually 0.2 to 0.5 MPa).

In many cases it is sufficient, however, to purify the steam by filtration, or better still, by so called scrubbing with the aid of saturated condensates. Steam is then allowed to bubble through a pressurized container which is filled with a condensate in which particles from the steam became suspended and gaseous chemicals absorbed.

An analysis of the carrier steam after and before purification with condensate is given in the table below:

Quality of steam after drying sugar pulp containing molasses

| | Solids mg/l | pH Value | Alcohols mg/l | Acids mg/l |
|---|---|---|---|---|
| Unpurified steam | 40 | 4.5 | 650 | 275 |
| Purified steam after scrubbing with alcaline condensate | None | 7.3 | 625 | 20 |

Owing to the method described above steam generated in the drying process may be used for evaporation without new equipment (such as stainless-steel evaporators) having to be installed. Instead, the existing carbon-steel equipment may be used.

After drying, which usually takes place at a pressure of between 0.2 and 0.6 MPa, the beet pulp is separated from the carrier steam in a cyclone 14. Dried beet pulp, i.e. the cattle feed, is discharged by a rotary valve feeder 15 into a stream of cold air at atmospheric pressure. In this process the material obtains the desired final dry contents, usually between 80 and 95%, and air cools the cattle feed while the latter is being transported to be pelleted and/or packaged.

The separated carrier steam is returned to the defibrator 10 through a recirculation pipe 16. The fans 12 and 13 supply the energy necessary to make up for the pressure loss during transport.

A bleeder pipe 17 is connected to the recirculation pipe 16. A pressure control valve 18 in the pipe 17, which valve is set for a pressure of 0.4 MPa is used to bleed off surplus carrier steam to replace a part of the fresh steam used to evaporate the sugar juice, in the present case 45% of that steam.

The method in accordance with the invention provides considerable advantages over the conventional technique. For instance, non-desired changes of flavour which were earlier caused by charred beet pulp and burning fuel oil are eliminated. In addition, it has been found that the bitter flavours existing naturally in sugar beet root disappear completely, probably through thermal disintegration and/or in the distillation of the water vapour. In the processing method in accordance with the invention the beet pulp is also disinfected, which facilitates storage and handling of the product. It has also been found that the digestibility, that is, the penetration by gastric juices and substances incorporated therein, is highly improved in beet pulp processed in accordance with the method of the subject invention as compared with that found in beet pulp dried with flue gas. The wetting and swelling properties of the product are also improved. Samples of the vapour-dried product in accordance with the invention swell, when submerged in water, considerably more rapidly and absorb larger quantities of water than does flue-gas dried beet pulp. In fact, the swelling properties are improved by about 100 percent as compared with the prior-art product.

The surprising improvements in quality thus obtained in cattle-feed products processed as described herein make the end product in accordance with the invention suitable also as foodstuff for human consumption. The food product may consist of the purified and dried fibre product. Additions may be made, both before and after drying. Preferably beet pulp without molasses is used when producing food for human consumption.

Preferably the entire processing method described is carried out in water vapour pressurized to a saturation temperature of between 105°C and 180°C, that is, an excess pressure of between 20 and 900 kPa. The disintegration step may, however, be carried out at atmospheric pressure in air or other media. The expansion may be carried out in steam at a lower pressure or to air at atmospheric pressure.

As described in the afore-going, molasses is preferably added after the conventional dewatering of the beet pulp but it should be obvious that the method in accordance with the invention is equally applicable to beet pulp processing without such addition of molasses. It is, however, necessary to

4

**0 058 651**

modify the various processing steps somewhat because of the lower dry contents of the beet pulp as compared with the dry contents of molasses.

During the drying procedure and the subsequent discharge of the beet pulp, some further disintegration takes place in the dryer 11 as a result of the high flow velocities and the impact from sudden velocity changes, and in the pulp discharge procedure as a result of the expansion from a higher to a lower pressure. This disintegration must be considered in the overall planning of the process to ensure that the end product meets the desired demands on e.g. quality.

One has found that in the drying operation not only water but also substances present in sugar beet that earlier gave a characteristic bitter taste to the feed product, are evaporated. Some such substances are thermally decomposed.

Compared with single-step procedures using flue-gas drying the proposed new method is considerable more efficient, particularly for agricultural materials, such as sugar beet pulp and peel and pulp from citrus fruits. In such materials, water is retained in the cells and is also bound hygroscopically to carbohydrates, pectins and proteins.

As mentioned previously, in rotary dryers a residence time of 30 minutes or more is necessary when flue-gases are used for drying. The average temperature difference is 185°C. In a steam atmosphere, on the other hand, the total residence time including preheating, disintegration, drying and separation, is about 50 seconds and the average temperature difference is 30°C. The differences in heat transfer rates (efficiency) may be expressed by the following relation:

$$\frac{\text{Time} \times \text{temp. diff.—Flue-gas drying}}{\text{Time} \times \text{temp. diff.—Steam process}} = \frac{30 \times 60 \times 185}{50 \times 30} = 222$$

i.e. heat is transferred about 200 times more efficiently when steam is used.

The method according to the invention also gives valuable gains regarding energy consumption. The examples below show the various values of pressure, temperatures and other data of the systems of the plant in accordance with the invention.

| | |
|---|---|
| Cattle feed, dry substance | 10 tons/h |
| Water contents before processing | 65%, 1.86 kg water/kg dry substance |
| Temperature before processing | 60°C |
| Temperature stage No. 1 | 150°C, 0.5 MPa |
| Water contents stage No. 1 | 70%, 2.30 kg water/kg dry substance |
| Temperature after refiner | 134°C |
| Water contents after refiner | 64%, 1.78 kg water/kg dry substance |
| Refining energy added | 350 kW |
| Heating steam added | 21.5 tons/h, 1 MPa |
| Steam added to ejector | 1.4 tons/h, 2 MPa |
| Steam added to ejector | 3.1 tons/h, 4 MPa |
| Produced processing steam to evaporation | 18.5 tons/h |
| Lost processing steam | 1.5 tons/h to atmosphere |
| Fan energy added | 290 kW |
| Moisture content in final product | 10%, 0.11 kg water/kg dry substance |
| Total demand of steam in evaporation | 55 tons/h |
| Demand of fresh steam from boiler | 36.5 tons/h |
| Steam from drying of beet fodder | 18.5 tons/h |

5

A comparison of the energy requirements of the new method and of conventional methods gives the following values:

| Drying: | New method | Conventional method |
|---|---|---|
| Steam demand 1 MPa | 21.5 tons/h | — |
| Steam demand 2 MPa | 1.4 tons/h | — |
| Steam demand 0.4 MPa | — | 1.0 tons/h |
| Overall electricity added | 640 kW | 730 kW |
| Fuel oil | — | 1800 litres/h |
| Evaporation:<br>Steam demand 0.4 MPa | 36.5 tons/h | 55 tons/h |

| | Energy consumption | |
|---|---|---|
| | New method | Conventional method |
| Drying: | MJ/ton dry sub. | MJ/ton dry sub. |
| Steam demand 1 MPa<br>(2015 MJ/ton) | 4332 | — |
| 2 MPa<br>(2800 MJ/ton) | 392 | — |
| 0.4 MPa<br>(2739 MJ/ton) | — | 274 |
| Electricity (0.36<br>MJ/dry sub.) | 230 | 263 |
| Fuel oil (36 MJ/l fuel oil) | — | 6480 |
| Evaporation:<br>Steam demand 0.4 MPa<br>(2134 MJ/ton) | 7789 | 11737 |
| Total MJ/ton dry sub.) | 12743 | 18754 |

Savings:    6011 MJ/ton dry sub.
          1671 fuel oil/ton dry substance
or    1670 l fuel oil/h

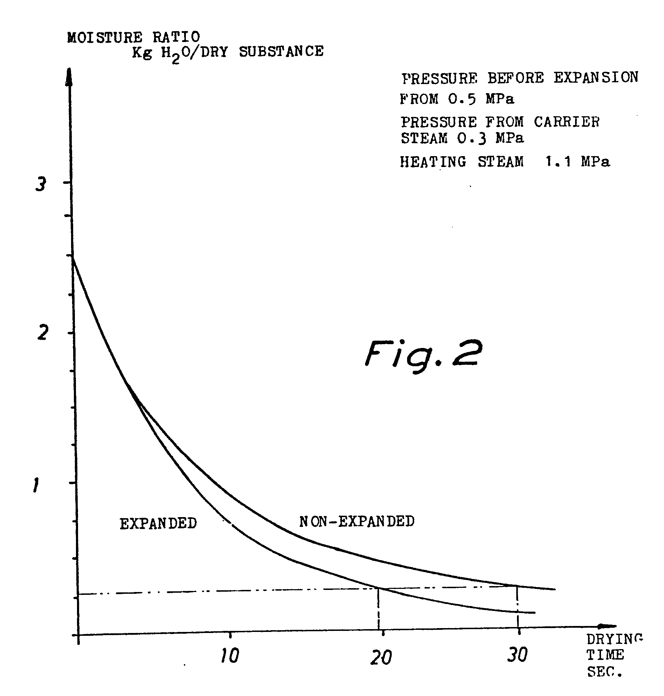

Fig. 2 is a graph plotting the drying time of beet pulp after expansion versus drying time without such expansion.

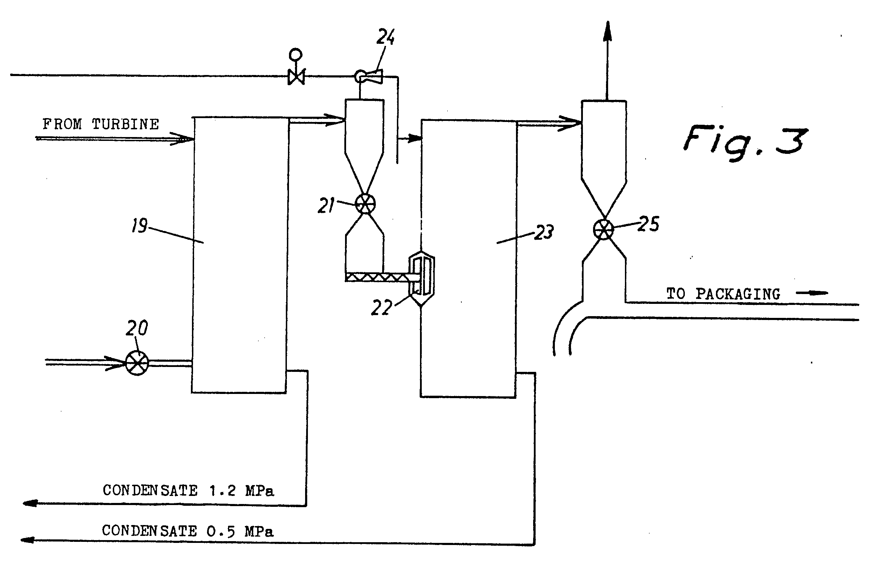

A second embodiment of the invention will now be described with reference to Fig. 3. According to this embodiment beet pulp having no addition thereto of molasses and without having been previously ground or expanded is dried in a two-stage operation.

The first drying stage 19 operates with heating steam at a pressure of 1.2 MPa and with carrier steam at a pressure of 0.5 MPa. Beet pulp is introduced into the drying stage via a rotary vane feeder 20 and the moisture contents are reduced in this stage from 78% to 65%. The material is then passed through a rotary valve feeder 21, wherein it expands when subjected to a pressure of 0.2 MPa, and is thereafter ground in a disc refiner 22. It is thereafter dried to a moisture content of 10% in a second dryer stage 23 at a pressure of 0.2 MPa. Steam produced at a pressure of 0.5 MPa serves as the heating steam. In the drying operation a balance is maintained between the two stages 19 and 23 to ensure that just enough steam at 0.5 MPa is consumed to dry the beet pulp to the desired dry contents. Particular care should be taken to optimize separately the amount of carrier steam from the first stage 19 to the second stage 23.

In the first dryer stage 19 weight ratios between beet pulp and carrier steam are 1:5 and the average flow velocity approximately 30 m/s. In the second dryer stage 23 the corresponding weight ratio is 1:3 and the average flow velocity 20 m/s. It should be evident that the space requirements for the plant and the electricity consumption of the fans of the systems therefore may be reduced considerably.

Should it be necessary to increase temporarily the capacity of the second drying stage 23, this may be done by increasing the amount of steam to a steam ejector 24 which is connected to this dryer stage. As a result, the pressure of the heating steam in the second drying stage rises.

After drying in the second dryer stage 23 the beet pulp is expanded via a rotary valve feeder 25 to the atmosphere.

According to a third embodiment of the method according to the invention hot oil may be used as the heating medium instead of steam to dry the cattle feed.

The so called Dowtherm® medium or equivalent media may be used. This medium is heated with or without evaporation to elevated temperatures in a boiler which in turn may be heated electrically or by any convenient fuel. The advantage of this procedure is that high temperatures may be obtained without high pressure being required.

The hot oil is supplied to the heat exchangers of the dryer plant. In this case only generated steam may be used to process the material. It is not possible to re-use this steam for drying purposes by means of pressing (mechanically or with the aid of steam ejectors). Instead, it may be used to pre-process the material and/or for evaporation.

The invention is not limited to the embodiments described and illustrated but may be modified in various ways within the scope of the appended claims. For instance, the disintegration as well as the expansion and drying may be carried out in several stages in different arrangements and sequences.

In order to prolong the yearly running time of plants—today it extends only over a few months—sugar beet pulp may be dried before leaching, and be stored and used to produce sugar. Partial leaching before drying may also be used.

By treating and drying in a steam atmosphere high material quality is maintained and the dried pulp remains hydrophilic, that is, it is easy to rewet and use in the leaching process.

The method in accordance with the invention is also applicable to other industrial processes that are similar to sugar refining processes. One such process is juice production where juice is produced from citrus fruits, such as oranges, lemons, tangerines and grape fruit. The fruit is washed and the juice is pressed and separated from the fruit pulp before being concentrated in a multiple-effect evaporating process. The peel and pulp material is dried into cattle feed together with molasses which is pressed from the peel and pulp, is concentrated with the aid of another multiple-effect evaporator before it is mixed with the pressed peel and pulp before drying. Lime may be added to increase dewaterability in the presses. Moist flue gases from rotary dryers are used today to heat the molasses evaporator. Expensive citrus oils such as D-limonene may be recovered from both the juice and molasses evaporators.

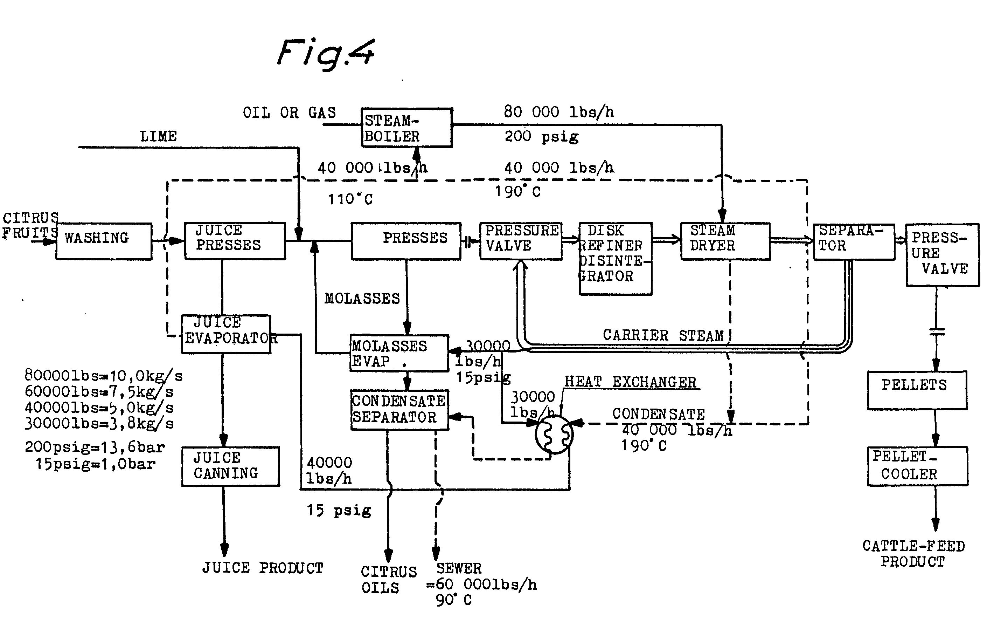

Fig. 4 shows the method according to the invention as applied in a process of drying citrus peel and pulp into a cattle feed product.

The product obtained when using the method in accordance with the invention is improved as to quality compared with similar products hitherto obtained in conventional processes, in addition to which it is produced in a more economical manner. Surprisingly enough, 50 to 70% more citrus oil can be recovered from the molasses evaporator and the steam reboiler.

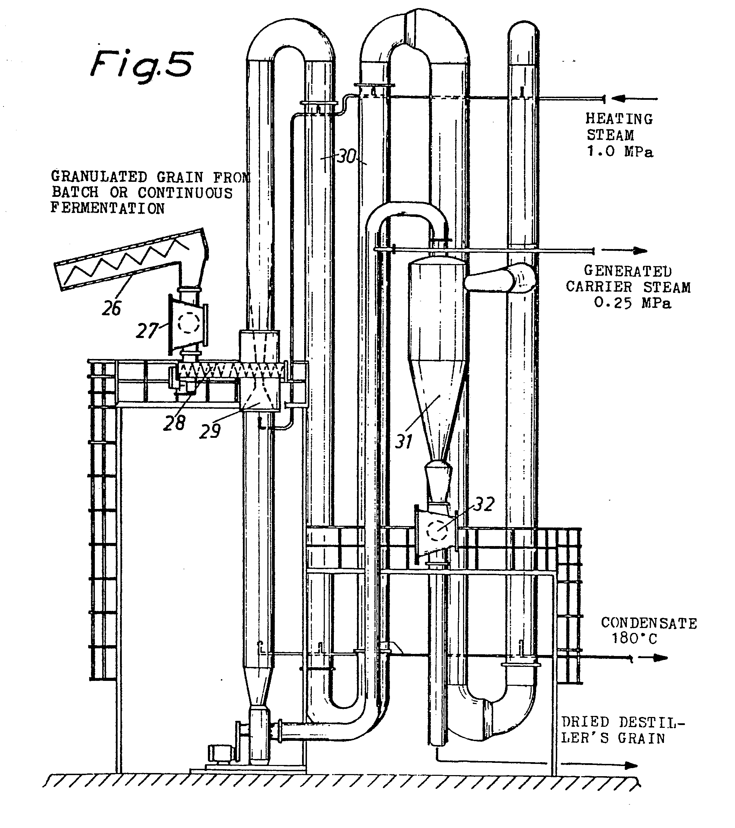

Also distiller's grain may be used to produce cattle feed in accordance with the method of the subject invention. Fig. 5 shows a plant designed for this purpose.

To dry distiller's grain originating from batch or continuous fermentation the feed/material initially has to be mechanically dewatered and/or concentrated by evaporation to a maximum dry content of 20 to 30% solids. By recycling the dried product, the sludgy material obtained in the fermentation process may be granulated. The granulated feed is preheated by direct condensation of generated carrier steam in heater 26. After having been fed to a pressure valve 27, the granulated material is further preheated in a pressurized steam heater 28 and disintegrated by high-velocity steam jets ejected from a nozzle 29. The pressure reduction from the inlet to the nozzle is between 0.01 and 0.1 MPa in order to reduce over-sized granules.

The thus disintegrated grain granules are dried in the same carrier steam as is used for the disintegration by being passed through steam-heated tubular heat exchangers 30.

The dried product is separated from the steam in a separator 31 and discharged by a valve 32 and thereafter cooled, stored and packed as cattle feed.

Surplus of generated carrier steam may be used to ferment or distill ethanol that is produced in the plant.

## Claims

1. A method of processing cattle feed products based on agricultural material, such as sugar beet pulp, citrus fruit pulp and peel, or material obtained in the fermentating of agricultural material, such as distiller's grain, comprising dewatering said material in a pressing operation and/or evaporation process, characterised by the steps of

heating said material with water vapour, known as carrier steam,
disintegrating said material in said carrier steam to obtain approximately uniform partice size of all solid matter incorporated in said material,
drying said particles in a heat exchanger, wherein said carrier steam preferably serves as a contributory drying medium,
separating said material from said carrier steam, and
cooling said material.

2. A method as claimed in claim 1, characterised in that said material is heated in at least two steps separated by disintegration.

3. A method as claimed in claim 1, characterised in that the disintegration is effected by breaking up the material mechanically.

4. A method as claimed in claim 1, characterised in that said carrier steam is pressurized, and that the material is disintegrated by being subjected to a sudden pressure drop, causing the particles of said material to burst and be torn apart.

5. A method as claimed in claim 1, characterised in that the material is disintegrated through a combination of mechanical fragmentation and expansion of the particles of said material.

6. A method as claimed in any one of the preceding claims, characterised in that the moisture contents of the material is reduced after dewatering by drying said material in steam at excess pressure, that the material is expanded and subjected to mechanical fragmentation and thereafter again dried and expanded to the atmosphere.

7. A plant for performing the method of processing cattle feed products based on agricultural material, such as sugar beet pulp, citrus fruit pulp and peel, or material obtained in the fermentation of agricultural material, such as distiller's grain, which material has been cut into chips, leached in water to extract the sugar, and dewatered through pressing, characterised in that the plant comprises a pressure vessel (5; 19; 28) containing pressurized steam, to which pressure vessel the material (1) is transported via a first pressure lock (4, 20), disintegrating means (8, 10; 21, 22; 29) designed to impart to all particles incorporated in said material an approximately uniform size, a heat exchanger (11, 23, 30) for drying the material, means (14, 15; 25; 32) for conveying said material through the heat exchanger (11, 23) and for separating said material from the steam, which steam serves as a material carrier medium, and a second pressure lock for discharging the material to the atmosphere.

8. A plant as claimed in claim 7, characterised in that the disintegrating means is a rotary valve feeder (8, 21) which is arranged to convey the material from the pressure vessel (5, 19) to a chamber (7) which is pressurized to a pressure below that of the pressure vessel in order to cause expansion of and possible also bursting of the particles of said material.

9. A plant as claimed in claim 7, characterised in that the disintegrating means is a defibrator (10, 22) which is arranged to disintegrate the material mechanically.

10. A plant as claimed in claim 7, characterised in that the disintegration means is a steam jet nozzle (29) which causes said carrier steam to accelerate as a result of a sudden pressure drop between 0.01 and 0.3 MPa.

11. A plant as claimed in claim 7, characterised in that the pressure vessel (19) serves as a dryer.

12. A plant as claimed in claim 7, characterised in that the means for conveying the material to the atmosphere consists of a cyclone (14) and a rotary valve feeder (15, 25).

## Patentansprüche

1. Verfahren zur Herstellung von Rinderfutter auf der Basis landwirtschaftlicher Produkte, wie Zuckerrübenschnitzel, Zitrusfrüchteschnitzel und -schalen, oder auf der Basis von bei der Fermentation landwirtschaftlicher Erzeugnisse anfallender Produkte, wie Getreideschlempe, durch Entwässern der Produkte in einem Press- und/oder einem Verdampfungsprozeß, gekennzeichnet durch folgende Verfahrensstufen

— Aufheizen des Produktes mit Wasserdampf, sog. Trägerdampf,
— Aufschließen des Produktes in dem Trägerdampf zur Erzielung annähernd gleichförmiger Partikelgröße aller in dem Produkt enthaltenen Feststoffe,
— Trocknen der Partikel in einem Wärmetauscher, wobei der Trägerdampf vorzugsweise als Trocknungsmedium herangezogen wird,
— Trennen des Erzeugnisses von dem Trägerdampf,
— Kühlen des Erzeugnisses.

2. Verfahren nach Anspruch 1, dadurch gekennzeichnet, daß das Produkt in wenigstens zwei durch das Aufschließen voneinander getrennten Stufen aufgeheizt wird.

3. Verfahren nach Anspruch 1, dadurch gekennzeichnet, daß das Aufschließen durch mechanisches Brechen des Produktes erfolgt.

4. Verfahren nach Anspruch 1, dadurch gekennzeichnet, daß der Trägerdampf unter erhöhten

# 0 058 651

Druck gesetzt und das Produkt dadurch zersetzt wird, daß es einem plötzlichen Druckabfall, der zum Bersten und Aufreißen der Partikel führt, unterworfen wird.

5. Verfahren nach Anspruch 1, dadurch gekennzeichnet, daß das Produkt durch Kombination einer mechanischen Zerkleinerung und einer Expansion der Partikel erfolgt.

6. Verfahren nach einem der Ansprüche 1 bis 5, dadurch gekennzeichnet, daß der Feuchtegehalt des Produktes nach dem Entwässern durch Trocknen im Dampf mit überhohem Druck verringert, das Produkt expandiert und einer mechanischen Zerkleinerung unterworfen und danach wieder getrocknet und auf Atmosphärendruck expandiert wird.

7. Anlage zur Durchführung des Verfahrens zur Herstellung von Rinderfutter auf der Basis landwirtschaftlicher Produkte, wie Zuckerrübenschnitzel, Zitrusfrüchteschnitzel und -schalen, oder auf der Basis von bei der Fermentation landwirtschaftlicher Erzeunisse anfallender Produkte, wie Getreideschlempe, die in Schnitzel geschnitten, in Wasser zur Extraktion von Zucker ausgelaugt und durch Pressen entwässert worden sind, dadurch gekennzeichnet, daß sie aus einem Druckkessel (5; 19; 28) mit Druckdampf, dem das Produkt (1) über eine erste Druckschleuse (4, 20), zugeführt wird, aus Aufschließungsmitteln (8, 10; 21, 22; 29) die allen in dem Produkt enthaltenen Partikeln eine annähernd einheitliche Größe verleiht, einem Wärmetauscher (11, 23, 30) zum Trocknen des Produktes, aus Mitteln (14, 15; 25; 32) zum Fördern des Produktes durch den Wärmetauscher und zum Trennen des Erzeugnisses von dem als Trägermedium für das Produkt dienenden Dampf und einer zweiten Druckschleuse zur Abgabe des Erzeugnisses an die Atmosphäre besteht.

8. Anlage nach Anspruch 7, dadurch gekennzeichnet, daß die Aufschließungsmittel aus einem Drehventilspeiser (8, 21) (Zellenradschleuse) gebildet sind, die das Produkt aus dem Druckkessel (5, 19) in eine Kammer (7) niedrigeren Drucks unter Entspannen und gegebenenfalls Bersten der Partikel fördert.

9. Anlage nach Anspruch 7, dadurch gekennzeichnet, daß die Aufschliessungsmittel aus einem das Produkt mechanisch aufschließenden Defibrator (10, 22) bestehen.

10. Anlage nach Anspruch 7, dadurch gekennzeichnet, daß die Aufschliessungsmittel von einer Dampfstrahldüse (29) gebildet sind, die den Trägerdampf infolge eines plötzlichen Druckabfalls zwischen 0,01 und 0,3 MPa beschleunigt.

11. Anlage nach Anspruch 7, dadurch gekennzeichnet, daß der Druckkessel (19) als Trockner dient.

12. Anlage nach Anspruch 7, dadurch gekennzeichnet, daß die Transportmittel zum Fördern des Erzeugnisses an die Atmosphäre aus einem Zyklon (14) und einem Drehventilspeiser (15, 25) (Zellenradschleuse) bestehen.

## Revendications

1. Un procédé de traitement de la nourriture pour le bétail, ayant pous base un produit agricole, tel que la pulpe de betterave sucrière, la pulpe ou peau d'agrumes, ou une matière obtenue dans la fermentation des produits agricoles, tels que les grains provenant de la distillation, de procédé comportant la déshydratation de la matière intéressée au cours d'une opération à la presse et/ou un processus d'évaporation, caractérisé par les phases opératoires suivantes:

— chauffage de la matière à l'aide de vapeur d'eau, connue sous le nom de vapeur d'entraînement,
— désintégration de cette matière dans la vapeur d'entraînement en vue d'obtenir une dimension de particule approximativement uniforme pour tous les solides incorporés à celle-ci,
— séchage desdites particules dans un échangeur de chaleur dans lequel ladite vapeur d'entraînement sert préférablement de milieu de séchage auxiliaire,
— séparation de ladite matière à partir de la vapeur d'entraînement et
— refroidissement de cette matière.

2. Procédé comme revendiqué en revendication 1, caractérisé en ce que ladite matière est chauffée en au moins deux phases séparées par la désintégration.

3. Procédé comme revendiqué en revendication 1, caractérisé en ce qu'on effectue la désintégration en brisant la matière par voie mécanique.

4. Procédé comme revendiqué en revendication 1, caractérisé en ce que la vapeur d'entraînement est pressurisée et en ce que la matière est désintégrée du fait qu'elle est soumise à une brusque chute de pression qui provoque l'éclatement de ses particules et leur arrachement par morceaux séparés.

5. Un procédé comme revendiqué en revendication 1, caractérisé en ce que la matière est désintégrée par une combinaison de fragmentation mécanique et d'expansion de ses particules.

6. Procédé comme revendiqué dans l'une quelconque des revendications précédentes, caractérisé en ce que la teneur en humidité de la matière est réduite après la déshydratation par séchage de celle-ci dans de la vapeur à une pression excédentaire, en ce que cette matière est expandée et est soumise à la fragmentation mécanique, puis est à nouveau séchée et expandée à la pression atmosphérique.

7. Une installation pour mettre en oeuvre le procédé de traitement de produits alimentaires pour le bétail ayant pour base un produit agricole, tel que la pulpe de betterave sucrière, la pulse et la pezu

9

d'agrumes, ou une matière obtenue dans la fermentation des produits agricoles, telle que les grains provenant de la distillation, laquelle matière a été découpée en petits morceaux, lessivée à l'eau pour en extraire le sucre, puis déshydratée à la presse, caractérisée en ce qu'elle comprend un réservoir sous pression (5; 19; 28) renfermant de la vapeur pressurisée et vers lequel la matière (1) est transportée à travers un premier sas (4, 20), un moyen (8, 10; 21, 22; 29) de désintégration de cette matière prévu pour impartir à toutes les particules qui lui sont incorporées une dimension approximativement uniforme, un échangeur de chaleur (11, 23, 30) pour sécher ladite matière, un moyen (14, 15; 25; 32) pour transporter celle-ci à travers l'échangeur (11, 23) et pour la séparer de la vapeur, laquelle sert d'agent transporteur, et un second sas pour évacuer la matière à l'atmosphère.

8. Une installation comme revendiquée en revendication 7, caractérisé en ce que le moyen de désintégration est constitué par une vanne d'alimentation rotative (8, 21), laquelle est agencée de façon à transporter la matière du réservoir sous pression (5, 19) vers une chambre (7) qui est pressurisée à une pression inférieure à celle de ce réservoir de façon à provoquer l'expansion et éventuellement aussi l'éclatement des particules de cette matière.

9. Une installation comme revendiquée en revendication 7, caractérisée en ce que le moyen de désintégration est constitué par un défibreur (10, 22) qui est agencé de façon à désintégrer la matière par voie mécanique.

10. Une installation comme revendiquée en revendiction 7, caractérisée en ce que le moyen de désintégration est constitué par une tuyère (29) à jet de vapeur qui provoque l'accélération de ladite vapeur d'entraînement en suite d'une brusque chute de pression entre 0,01 et 0,3 MPa.

11. Une installation comme revendiquée en revendication 7, caractérisée en ce que le réservoir sous pression (19) sert de séchoir.

12. Une installation comme revendiquée en revendication 7, caractérisée en ce que le moyen propre à amener la matière à l'atmosphére est constitué par un cyclone (14) et par une vanne d'alimentation tournante (15, 25).

Fig.1

TO EVAPORATION
OF SUGAR JUICE

FROM
STEAM-
BOILER

1-1.2 MPa

2 MPa

0058651

MOISTURE RATIO
Kg $H_2O$/DRY SUBSTANCE

PRESSURE BEFORE EXPANSION
FROM 0.5 MPa

PRESSURE FROM CARRIER
STEAM 0.3 MPa

HEATING STEAM   1.1 MPa

*Fig. 2*

EXPANDED                    NON-EXPANDED

DRYING
TIME
SEC.

2

Fig. 3

FROM TURBINE

24

21

22

23

25

19

20

TO PACKAGING ⟶

CONDENSATE 1.2 MPa

CONDENSATE 0.5 MPa

0058651

Fig.4

**Fig.5**

GRANULATED GRAIN FROM
BATCH OR CONTINUOUS
FERMENTATION

26

27

28  29

30

31

32

HEATING
STEAM
1.0 MPa

GENERATED
CARRIER STEAM
0.25 MPa

CONDENSATE
180°C

DRIED DESTIL-
LER'S GRAIN